# EUROPEAN PATENT SPECIFICATION

(11) **EP 1 455 010 B1**
(45) Date of publication and mention of the grant of the patent: **09.03.2011**
(21) Application number: 02786037.8
(22) Date of filing: 05.12.2002
(51) Int. Cl.: D04H 1/54, A47J 31/06, B01D 39/16

(54) **SHEET FOR LEACHING**
VLIES ZUM LAUGEN
FEUILLE DE LIXIVIATION

(30) Priority: 07.12.2001 WO PCT/JP01/10724
(43) Date of publication of application: 08.09.2004
(73) Proprietor: Ohki Co., Ltd., Osaka-shi, Osaka 541-0059 (JP); Kinsei Seishi Co., Ltd., Kochi-shi, Kochi 780-0921 (JP)
(72) Inventor: Miyahara, Fumio c/o 5F., Sakaisuji Trust Bldg.,, Osaka-shi, Osaka 541-0059 (JP); Yamaguchi, Naoko, Osaka-shi, Osaka 542-0081 (JP); Yasumitsu, Yasuji, Kochi-shi, Kochi 780-0921 (JP)
(74) Representative: TBK-Patent
(86) International application number: PCT/JP2002/012755
(87) International publication number: WO 2003/048439

(56) References cited:
- JP-A- 7 133 574
- JP-A- 9 021 055
- JP-A- 2002 238 768
- PATENT ABSTRACTS OF JAPAN vol. 1996, no. 04, 30 April 1996 (1996-04-30) -& JP 07 330026 A (HITACHI ZOSEN CORP), 19 December 1995 (1995-12-19)
- PATENT ABSTRACTS OF JAPAN vol. 14, no. 261, 6 June 1990 (1990-06-06) -& JP 02 074659 A (YAMANAKA SANGYO KK), 14 March 1990 (1990-03-14)
- PATENT ABSTRACTS OF JAPAN vol. 2000, no. 20, 10 July 2001 (2001-07-10) -& JP 2001 081627 A (MITSUI CHEMICALS INC.), 27 March 2001 (2001-03-27)
- PATENT ABSTRACTS OF JAPAN vol. 1995, no. 08, 29 September 1995 (1995-09-29) -& JP 07 133574 A (NEW OJI PAPER CO), 23 May 1995 (1995-05-23)

## Description

### TECHNICAL FIELD

The present invention relates to a percolation sheet for use in the extraction of permeable (or extractable) raw materials such as black tea, coffee, green tea, traditional Chinese medicines and the like.

### BACKGROUND ART

In the case of percolation sheets used for the extraction of effusible (or extractable) raw materials such as black tea, coffee, green tea, traditional Chinese medicines and the like, good percolation characteristics with respect to the extract are required. Furthermore, in the case of percolation sheets that are used in the form of tea bags, it is necessary that the sheet have properties that allow bag manufacture, that is, it must be possible to manufacture bags easily using a heat-sealing machine.

Conventionally, therefore, nonwoven fabrics made of synthetic fibers, in which the fibers themselves have low hygroscopicity and good percolation characteristics, have been used as percolation sheets. Furthermore, a sheet manufactured by laminating a spun-bonded nonwoven fabric constituted of polyester fibers with a high-melting-point and a carded nonwoven fabric constituted of polyester fibers with a low-melting-point (Flouveil (tradename) manufactured by OHKI Co., LTD.) is known as a percolation sheet that is suitable for bag-manufacturing. In the case of this percolation sheet formed by laminating a high-melting-point spun-bonded nonwoven fabric and a low-melting-point carded nonwoven fabric, heat-sealing can easily be accomplished without any fusion of the fibers to the heating head of the heat-sealing machine by superimposing the two percolation sheets with the low-melting-point carded nonwoven fabric on the inside, and placing the superimposed sheets in a heat-sealing machine.

However, in a conventional percolation sheet formed by laminating a spun-bonded nonwoven fabric and a carded nonwoven fabric, the fibers of the carded nonwoven fabric are oriented in a specified direction that is determined by the carding machine, and are not uniformly dispersed in random directions. Consequently, the pore size distribution of the voids in the nonwoven fabric extends over a broad range. Accordingly, if the basis weight of the percolation sheet is adjusted so that a desirable liquid passage rate is obtained, fine particles of the permeable raw material may pass through the percolation sheet. On the other hand, if it is attempted to prevent the passage of fine particles of the permeable raw material completely, the liquid passage rate shows an extreme drop.

Furthermore, in the case of a conventional percolation sheet formed by laminating a spun-bonded nonwoven fabric and a carded nonwoven fabric, if the sealing width along the rim portion of the tea bag is narrowed in response to the recent market demand for a narrowing of this sealing width from the conventional value of approximately 5 mm to a value of approximately 2 mm, areas with a low sealing strength are generated in the sealing parts, since the fibers of the carded nonwoven fabric that perform a sealing function are oriented in a specified direction, and are not uniformly dispersed in random directions.

In regard to such problems, it is an object of the present invention to prevent the generation of areas with a low sealing strength in the sealing parts even in cases where the sealing width is narrowed, and to prevent the passage of fine particles of the permeable raw material while maintaining a desirable liquid passage rate during the extraction of the permeable raw material.

### DISCLOSURE OF THE INVENTION

The present inventor discovered that if the low-melting-point nonwoven fabric in a percolation sheet formed by laminating a high-melting-point nonwoven fabric and a low-melting-point nonwoven fabric is constituted of a nonwoven fabric in which short fibers are randomly dispersed and deposited by a dry process and these fibers are thermally bonded to each other at the intersection points thereof, the uniform dispersion of the short fibers in random directions makes it possible to achieve heat sealing at a uniform strength in all portions of the nonwoven fabric. Furthermore, the present inventor also discovered that since the pore size distribution of the voids in such a nonwoven fabric is concentrated in an extremely narrow range, there are no voids that have an excessively large pore size with respect to the desired void pore size, so that the passage of fine particles of the permeable raw material during the extraction of the permeable raw material can be prevented.

Specifically, the present invention provides a percolation sheet which is formed by laminating a long-fiber nonwoven fabric with a basis weight of 5 to 30 g/m², at least part of which is formed from synthetic fibers of a high-melting-point resin, and a short-fiber nonwoven fabric with a basis weight of 3 to 15 g/m², at least a portion of which is formed from synthetic fibers of a low-melting-point resin, wherein the short-fiber nonwoven fabric is formed from a nonwoven fabric in which fibers with a fiber length of 3 to 15 mm are randomly dispersed and deposited using a dry process, and are thermally bonded to each other, and in the diagram illustrating the relationship between the pore size of the voids in the percolation sheet and the distribution rate thereof, the distribution rate of the maximum peak is ten times or more of the distribution rate of the other peaks.

### BRIEF DESCRIPTION OF THE DRAWINGS

Fig. 1 is a sectional view of the percolation sheet of the present invention;
Fig. 2(a) shows a photograph that illustrates the orientation of the fibers in an air-laid nonwoven fabric and Fig. 2(b) shows a photograph that illustrates the orientation of the fibers in a carded nonwoven fabric;
Fig. 3 is an explanatory diagram of the sealing strength test method;
Fig. 4 is a diagram of the pore size distribution of the voids in the percolation sheet of Example 1;
Fig. 5 is a diagram of the pore size distribution of the voids in the percolation sheet of Comparative Example 1; and
Fig. 6 is a diagram of the pore size distribution of the voids in the percolation sheet of Comparative Example 2.
Fig. 7 is a diagram of the pore size distribution of the voids in the percolation sheet of Example 2.
Fig. 8 is a diagram of the pore size distribution of the voids in the percolation sheet of Example 2.
Fig. 9 is a diagram of the pore size distribution of the voids in the percolation sheet of Example 2.
Fig. 10 is a diagram of the pore size distribution of the voids in the percolation sheet of Example 2.

### BEST MODE FOR CARRYING OUT THE INVENTION

The present invention will be described in detail below with reference to the figures.

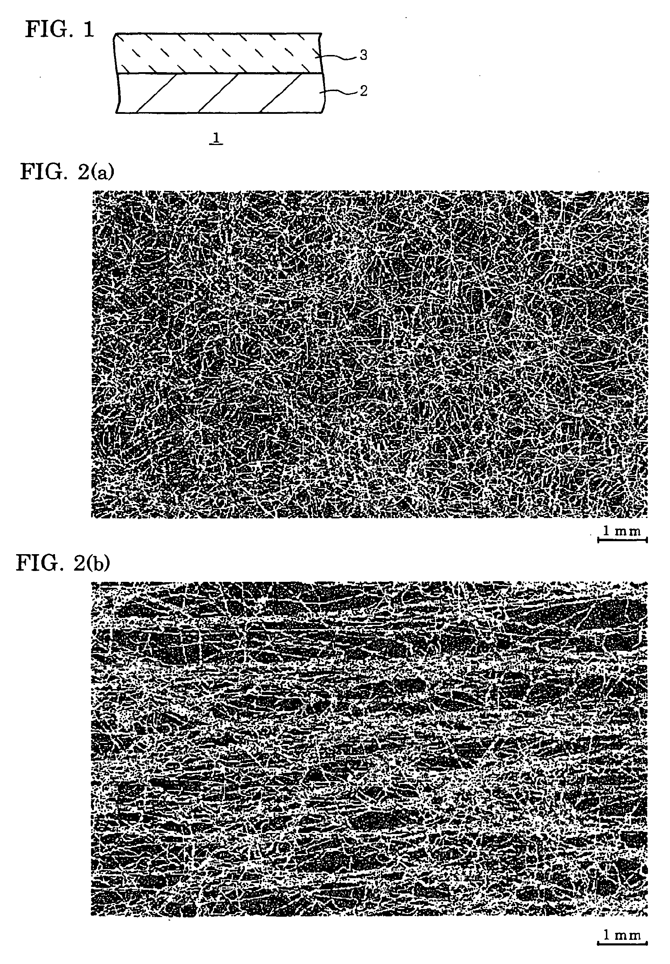

Fig. 1 shows the percolation sheet 1 of one aspect of the present invention; this percolation sheet has a laminated structure in which a long-fiber nonwoven fabric 2 and a short-fiber nonwoven fabric 3 are laminated.

Of these nonwoven fabrics, at least one portion of the long-fiber nonwoven fabric is formed from synthetic fibers of a high-melting-point resin, and preferably, at least one portion of this long-fiber nonwoven fabric is formed from synthetic fibers of a high-melting-point resin with a melting point of 170°C or higher. As a result, when the two percolation sheets are superimposed with the short-fiber nonwoven fabric on the inside and placed in a heat-sealing machine, fusion of the fibers to the heating head of the heat-sealing machine can be prevented.

The reference to at least a portion of the long-fiber nonwoven fabric being formed from synthetic fibers of a high-melting-point resin with a melting point of 170°C or higher includes cases in which the synthetic fibers that form the long-fiber nonwoven fabric are constituted only of a synthetic resin with a melting point of 170°C or higher, cases in which these synthetic fibers is constituted of mixed fibers constituted of a synthetic resin with a melting point of 170°C or higher and fibers constituted of a synthetic resin with a melting point of less than 170°C, and cases in which these synthetic fibers are constituted of fibers with a core-sheath structure in which at least the surface layer (sheath) is formed from a synthetic resin with a melting point of 170°C or higher.

For instance, high-melting-point polyesters (high-melting-point polyethylene terephthalates: melting point 245°C), polyamides (nylon 66: melting point 245°C), polyphenyl sulfides (melting point 290°C), polylactic acids (melting point 178°C) and the like may be cited as examples of synthetic resins with a melting point of 170°C or higher.

From the standpoint of the stability of the basis weight of the nonwoven fabric, it is desirable that the fiber diameter of the synthetic fibers that form the long-fiber nonwoven fabric be 3 µm or less.

Methods that can be used to convert such synthetic fibers into a nonwoven fabric include melt-blowing and the like; however, spun-bonding is desirable from the standpoint of obtaining a high strength without causing clogging.

Furthermore, the basis basis weight of the long-fiber nonwoven fabric is set at 5 to 30 g/m². If the basis weight is less than 5 g/m², the strength is insufficient; conversely, if the basis weight exceeds 30 g/m², the percolation characteristics and mechanical suitability suffer, so that such a high basis weight is undesirable.

Meanwhile, in the percolation sheet of the present invention, at least one portion of the short-fiber nonwoven fabric is formed from synthetic fibers of a low-melting-point resin, and preferably, at least one portion is formed from synthetic fibers of a low-melting-point resin with a melting point of 80°C or greater but less than 170°C. As a result, heat sealing can easily be accomplished by superimposing the two percolation sheets with the short-fiber nonwoven fabric on the inside, and placing the superimposed sheets in a heat-sealing machine.

The reference to at least one portion of the short-fiber nonwoven fabric being constructed from synthetic fibers of a low-melting-point resin with a melting point of 80°C or greater but less than 170°C includes cases in which the synthetic fibers that form the short-fiber nonwoven fabric are constituted only of a synthetic resin with a melting point of 80°C or greater but less than 170°C, cases in which these synthetic fibers are constituted of mixed fibers formed from a synthetic resin with a melting point of 80°C or greater but less than 170°C and other fibers, and cases in which these synthetic fibers are constituted of fibers with a core-sheath structure in which at least the surface layer is formed from a synthetic resin with a melting point of 80°C or greater but less than 170°C. In particular, the use of fibers with a core-sheath structure is desirable from the standpoint of preventing the crushing of the voids in the nonwoven fabric when the long-fiber nonwoven fabric and short-fiber nonwoven fabric are joined. Furthermore, from the standpoint of increasing the joining strength of the long-fiber nonwoven fabric and short-fiber nonwoven fabric, it is desirable to use the same type of resin for the fibers that form the long-fiber nonwoven fabric and the fibers that form the short-fiber nonwoven fabric. Especially in cases where fibers with a core-sheath structure are used, it is desirable to use the same type of resin for the surface layers (sheaths) of the respective fibers.

For instance, low-melting-point polyesters (low-melting-point polyethylene terephthalates, melting point 100 to 160°C), polyethylenes (melting point 90 to 140°C), polypropylenes (melting point 160 to 168°C) and the like may be cited as examples of synthetic resins with a melting point of 80°C or greater but less than 170°C.

Furthermore, fibers in which the core/sheath is formed from a high-melting-point polyester/low-melting-point polyester, high-melting-point polyester/polyethylene, polypropylene/polyethylene or the like may be cited as examples of fibers with a core-sheath structure.

The fiber length of the synthetic fibers that form the short-fiber nonwoven fabric is set at 3 to 15 mm, preferably 5 to 7 mm. If the fiber length is too short, the strength of the nonwoven fabric drops; furthermore, the fiber density is increased so that the liquid passage rate is slowed. Conversely, if the fiber length is too long, it becomes difficult to achieve a uniform dispersion of the fibers.

The fiber diameter of the synthetic fibers that form the short-fiber nonwoven fabric also depends on the pore size distribution desired for the percolation sheet in accordance with the permeable raw material. However, in cases where (for example) the percolation sheet is used in common tea bags for black tea, the fiber diameter is preferably set at 0.1 to 3.0 d (denier), and is even more preferably set at 0.5 to 2.0 d. If the fiber diameter is too small, the pore size of the nonwoven fabric will be reduced, so that the liquid passage rate is slowed. Conversely, if the pore size is too large, fine particles of the permeable raw material such as black tea or the like will pass through the nonwoven fabric, so that the taste and appearance of the extracted liquid suffer.

In regard to the method used to form such synthetic fibers into a nonwoven fabric, first a web is formed by randomly dispersing and depositing the fibers using a dry process; then, a nonwoven fabric is formed by thermally fusing the fibers to each other at the intersection points thereof. In more concrete terms, a web is formed by the air-laying method, and this web is heat-treated using an embossing roll, flat roll or the like.

In the web formed by the air-laying method, the fibers are dispersed with a uniform thickness in random directions. Furthermore, the uniformity of the dispersion of the fibers is not impaired even if this web is heat-treated with an embossing roll or the like. Accordingly, in the short-fiber nonwoven fabric formed in this manner, the pore size distribution is concentrated on a narrow range. In the diagram illustrating the relationship between the pore size of the voids in the percolation sheet and the distribution rate thereof, the distribution rate of the maximum peak is ten times or more of the distribution rate of the other peaks. The pore size distribution shows a dispersion range of preferably 100 µm or less, more preferably 50 µm or less, and shows a single peak. Furthermore, the term "pore size distribution" used in the present invention refers to a distribution measured by the bubble point method (JIS K3832).

Furthermore, the pore size distribution of the short-fiber nonwoven fabric formed in this manner can be sharply controlled by adjusting the fiber diameter and basis weight of the nonwoven fabric.

Furthermore, a nonwoven fabric in which the fibers are dispersed in random directions can also be obtained using a papermaking process, which is a wet process; however, the air-laying method is preferable from the standpoint of productivity.

In regard to the method used to laminate the long-fiber nonwoven fabric and short-fiber nonwoven fabric in the present invention, a method may be used in which the long-fiber nonwoven fabric and short-fiber nonwoven fabric are separately formed, after which both are superimposed and laminated by performing a heat treatment using an embossing roll, flat roll or the like; alternatively, a method may be used in which a web that forms the short-fiber nonwoven fabric is formed onto the long-fiber nonwoven fabric, and a heat treatment is applied to this using an embossing roll, flat roll or the like so that the conversion of the web that forms the short-fiber nonwoven fabric and the lamination and bonding of the short-fiber nonwoven fabric and long-fiber nonwoven fabric are performed simultaneously.

In the percolation sheet of the present invention, a low-melting-point short-fiber nonwoven fabric and a high-melting-point long-fiber nonwoven fabric are laminated, and the pore size distribution of the short-fiber nonwoven fabric is concentrated on a narrow range. On the other hand, the pore sizes of the long-fiber nonwoven fabric are large. Accordingly, with respect to the pore size distribution of the percolation sheet as a whole, in the diagram illustrating the relationship between the pore size of the voids in the percolation sheet and the distribution rate thereof, the distribution rate of the maximum peak is ten times or more of the distribution rate of the other peaks, and the pore size distribution shows a dispersion range of preferably 100 µm or less, more preferably 50 µm or less, and shows a single peak. Consequently, a desirable liquid passage rate can be ensured, and the passage of fine particles of the permeable raw material through the percolation sheet can be prevented during the extraction of the permeable raw material. Furthermore, since the low-melting-point fibers of the short-fiber nonwoven fabric which bears the bonding characteristics that are required when the percolation sheet is heat-sealed are dispersed at a uniform thickness in random directions, heat sealing with a uniform strength can be accomplished in all parts of the nonwoven fabric. Accordingly, even if the sealing width is narrow, areas of insufficient strength are not generated in the sealed portions. Consequently, the percolation sheet of the present invention is extremely useful as a sheet material for forming tea bags used for permeable raw materials such as black tea, coffee, green tea, traditional Chinese medicines and the like.

Besides a sheet which has a laminated structure constituted of a long-fiber nonwoven fabric 2 and short-fiber nonwoven fabric 3 as shown in Fig. 1, other woven fabrics, nonwoven fabrics or the like may also be laminated if necessary in the percolation sheet of the present invention. For example, a bonding nonwoven fabric may be disposed between the long-fiber nonwoven fabric and short-fiber nonwoven fabric in order to increase the bonding strength thereof.

### EXAMPLES

The present invention will be concretely described below in terms of embodiments.

### Experiment 1

A web was formed by the air-laying method using fibers (fiber diameter 1.0 d, fiber length 5 mm) with a core-sheath structure in which the core/sheath constituted of a high-melting-point polyethylene terephthalate/low-melting-point polyethylene terephthalate, and an air-laid nonwoven fabric was manufactured by applying a heating roll. Meanwhile, a carded nonwoven fabric was manufactured using similar fibers. Then, ten samples with dimensions of 9.0 cm x 6.0 cm and ten samples with dimensions of 100 cm × 100 cm were cut from the respective nonwoven fabrics, and the basis weight of the samples was measured. The results obtained are shown in Tables 1 and 2. Furthermore, a photograph of the air-laid nonwoven fabric is shown in Fig. 2 (a), and a photograph of the carded nonwoven fabric is shown in Fig. 2 (b).

**Table 1**

| Sample No. | Air-laid nonwoven fabric [g/9.0cm×6.0cm] | Carded nonwoven fabric [g/9.0cm ×6.00 cm] |
|---|---|---|
| 1 | 0.044 | 0.056 |
| 2 | 0.045 | 0.054 |
| 3 | 0.044 | 0.059 |
| 4 | 0.043 | 0.057 |
| 5 | 0.044 | 0.055 |
| 6 | 0.044 | 0.056 |
| 7 | 0.045 | 0.059 |
| 8 | 0.44 | 0.057 |
| 9 | 0.44 | 0.055 |
| 10 | 0.44 | 0.058 |
| Mean | 0.044 | 0.057 |
| Standard deviation | 0.00054 | 0.00162 |

**Table 2**

| Sample No. | Air-laid nonwoven fabric [g/100cm × 100cm] | Carded nonwoven fabric [g/100cm × 100cm] |
|---|---|---|
| 1 | 8.14 | 10.42 |
| 2 | 8.02 | 10.58 |
| 3 | 8.29 | 10.32 |
| 4 | 8.23 | 10.12 |
| 5 | 8.15 | 10.71 |
| 6 | 8.31 | 10.44 |
| 7 | 8.22 | 10.28 |
| 8 | 8.16 | 10.41 |
| 9 | 8.07 | 10.35 |
| 10 | 7.99 | 10.40 |
| Mean | 8.16 | 10.40 |
| Standard deviation | 0.10245 | 0.15238 |

In Tables 1 and 2, a comparison of the standard deviations of the weights of the air-laid nonwoven fabric and the carded nonwoven fabric indicates that the air-laid nonwoven fabric shows very little variation in weight within the nonwoven fabric compared to the carded nonwoven fabric.

Furthermore, it is seen from Figs. 2(a) and 2(b) that while the fibers are uniformly dispersed in random directions in the air-laid nonwoven fabric, the fibers are oriented in a fixed direction in the carded nonwoven fabric, so that there is some irregularity in the basis weight.

### Example 1, Comparative Examples 1 and 2

A spun-bonded nonwoven fabric was manufactured using a high-melting-point polyester with a fiber diameter of 2.0 d. A web was formed onto this nonwoven fabric by the air-laying method using fibers (fiber diameter 2.0 d, fiber length 5 mm) with a core-sheath structure in which the core/sheath were constituted of a high-melting-point polyethylene terephthalate/low-melting-point polyethylene terephthalate, and an embossing roll was applied thereto, so that a percolation sheet in which an air-laid nonwoven fabric (basis weight 6 g/m²) was laminated on a spun-bonded nonwoven fabric (basis weight 12 g/m²) was manufactured (Example 1).

Meanwhile, a percolation sheet similar to the above in which a carded nonwoven fabric (basis weight 8 g/m²) was laminated on a spun-bonded nonwoven fabric (basis weight 12 g/m²) was manufactured using the same fibers (provided that the fiber length is 51 mm) as those used in the air-laid nonwoven fabric (Comparative Example 1).

Furthermore, a percolation sheet was also manufactured in the same manner as in Comparative Example 1, except that the embossing shape of the embossing roll was altered (Comparative Example 2).

### Example 2

A percolation sheet, in which an air-laid nonwoven fabric (basis weight 8 g/m²) was laminated on a spun-bonded nonwoven fabric, was also manufactured in the same manner as in Comparative Example 1, except that the air-laid nonwoven fabric has a basis weight 8 g/m².

### Evaluation

### (1) Test of Sealing Strength

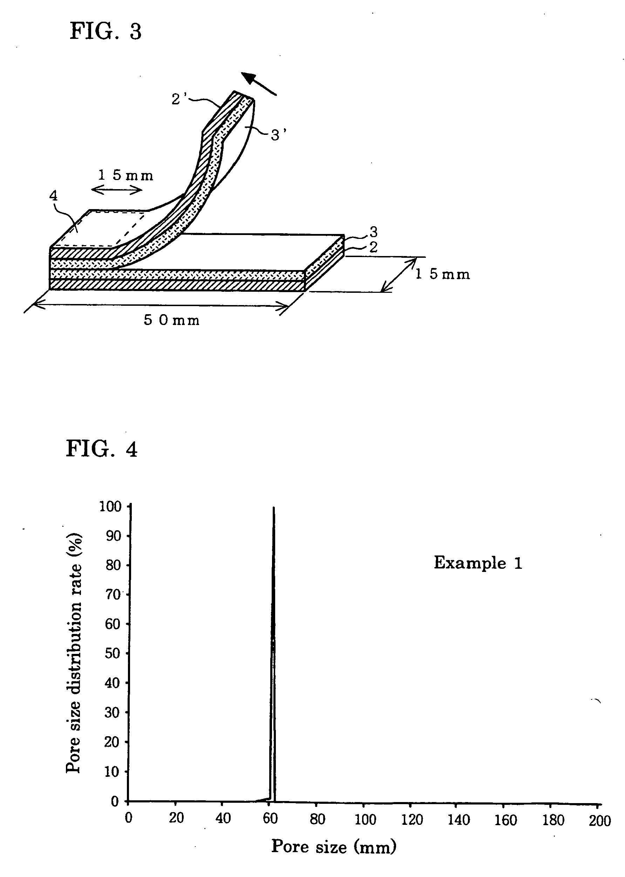

The two percolation sheets of Embodiment 1 were superimposed with the air-laid nonwoven fabric on the inside, and were heat-sealed at a width of 15 mm (heating temperature 150°C). The heat-sealed sheets were then cut into a rectangular shape (15 mm × 50 mm) as shown in Fig. 3, and the load at which the sealed part 4 peeled away when a peeling force was applied from the non-sealed side was determined. In Fig. 3, the numeral 2' denotes a spun-bonded nonwoven fabric and the numeral 3' denotes an air-laid nonwoven fabric.

The percolation sheets of Comparative Example 1 were similarly superimposed and heat-sealed with the carded nonwoven fabric on the inside, and the load at which the sealed part peeled away was determined.

The results obtained are shown in Table 3.

**Table 3**

| Sample No. | Example 1 [kg/15cm] | Comparative Example 1 [g/100cm × 100cm] |
|---|---|---|
| 1 | 0.22 | 0.46 |
| 2 | 0.22 | 0.68 |
| 3 | 0.23 | 0.37 |
| 4 | 0.21 | 0.39 |
| 5 | 0.21 | 0.41 |
| 6 | 0.22 | 0.70 |
| 7 | 0.24 | 0.62 |
| 8 | 0.23 | 0.33 |
| 9 | 0.20 | 0.41 |
| 10 | 0.23 | 0.54 |
| Mean | 0.22 | 0.49 |
| Standard deviation | 0.10245 | 0.15238 |

It is seen from Table 3 that the percolation sheet of Example 1 shows very little variation in sealing strength compared to the percolation sheet of Comparative Example 1.

### (2) Pore Size Distribution

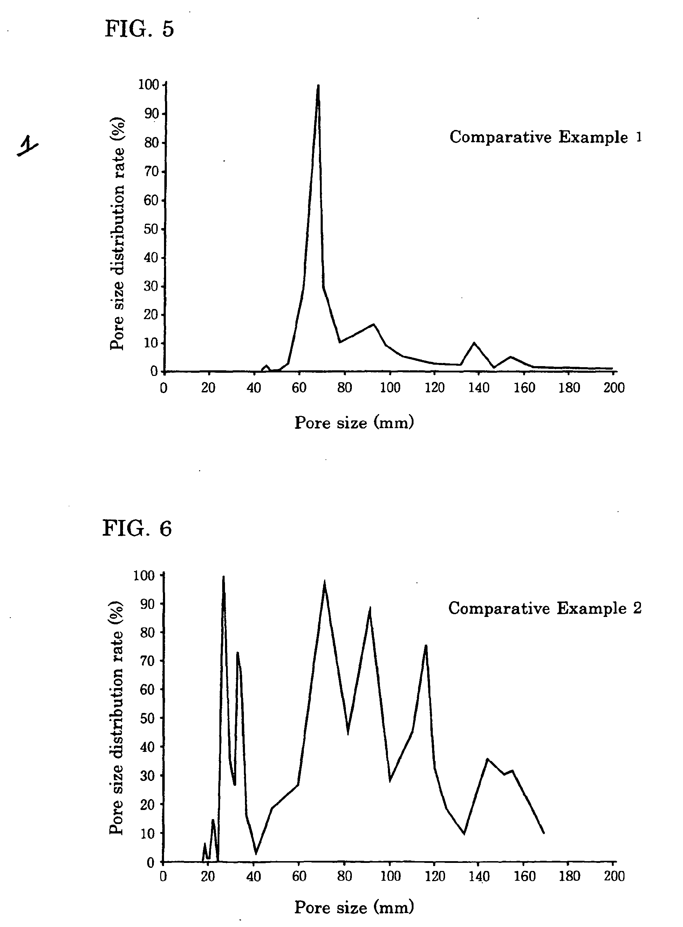

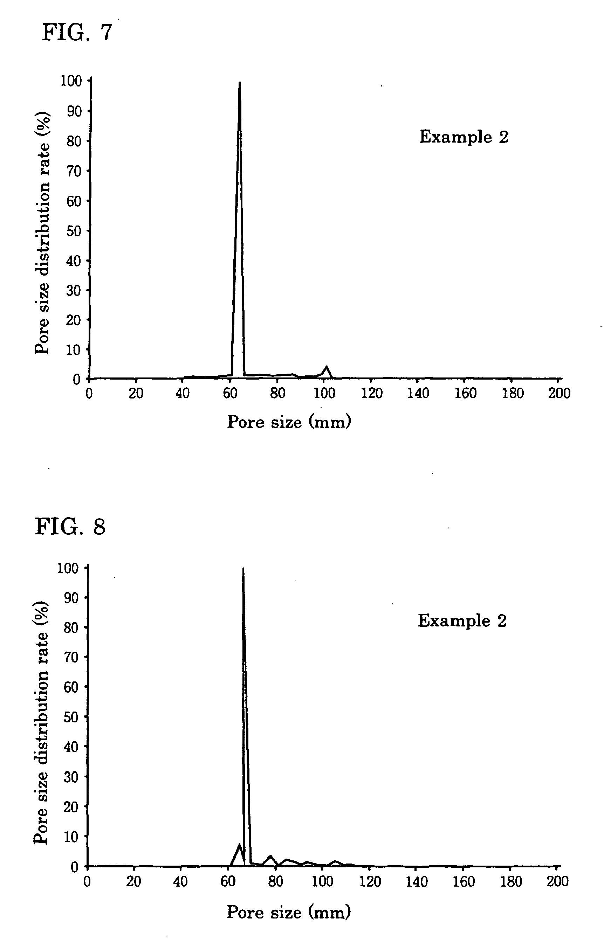

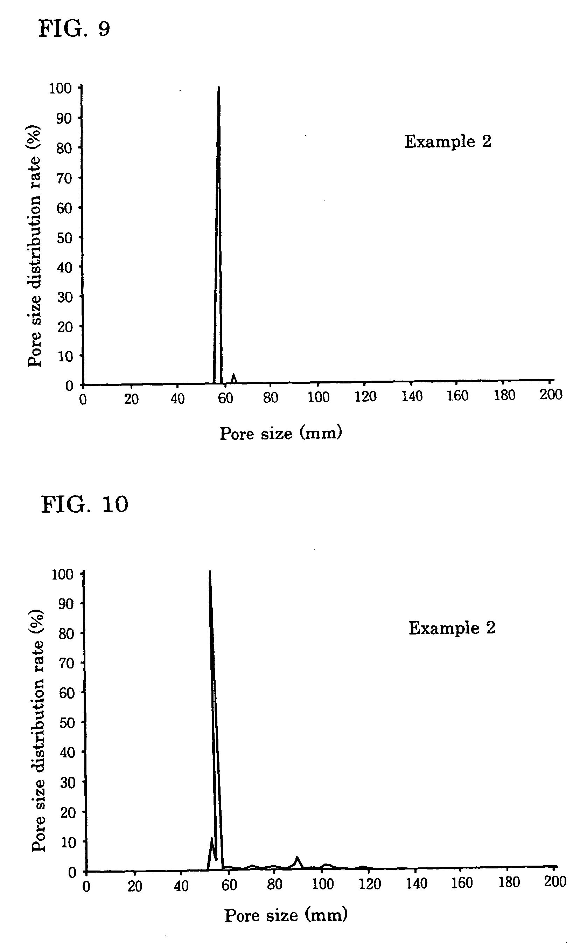

The pore size distributions of the voids in the respective percolation sheets of Example 1, Example 2, Comparative Examples 1 and Comparative Example 2 were measured by the bubble point method (JIS K3832) using a Perm-Porometer manufactured by U.S. PMI Co. The results obtained are shown in Figs. 4 through 10. With respect to the percolation sheet of Example 2, it was measured at 4 measurement points different from each other in respect of a position in width direction (Figs. 7 to 10).

It is seen from these figures that while the percolation sheets of Comparative Example 1 and Comparative Example 2 show a variation of more than 140 µm in the pore size distribution, with a plurality of peaks being present in this range, the pore size distribution of the percolation sheet of Example 1 shows a single peak in a variation range of less than 10 µm, so that the pore size distribution is concentrated in this range. With respect to the percolation sheet of Example 2, at any of the 4 measurement points, the distribution rate of the maximum peak was ten times or more of the distribution rate of the other peaks, and the pore size distribution was concentrated on the maximum peak.

### INDUSTRIAL APPLICABILITY

The percolation sheet of the present invention makes it possible to achieve a conspicuous reduction in the variation of the sealing strength in the sealed parts, even in cases where the sealing width is made narrow. Furthermore, since the pore size distribution of the voids in the nonwoven fabric can be sharply controlled, preferably made to be a single peak, the passage of fine particles of the permeable raw material through the percolation sheet can be prevented while maintaining a desirable liquid passage rate during the extraction of the permeable raw material.

## Claims

1. A percolation sheet which is formed by laminating a long-fiber nonwoven fabric with a basis weight of 5 to 30 g/m², at least part of which is formed from synthetic fibers of a high-melting-point resin, and a short-fiber nonwoven fabric with a weight of 3 to 15 g/m², at least a portion of which is formed from synthetic fibers of a low-melting-point resin, wherein the short-fiber nonwoven fabric is formed from a nonwoven fabric in which fibers with a fiber length of 3 to 15 mm are randomly dispersed and deposited using a dry process, and are thermally bonded to each other, and in a diagram illustrating the relationship between the pore size of the voids in the percolation sheet and the distribution rate thereof, the distribution rate of the maximum peak is ten times or more of the distribution rate of the other peaks.

2. The percolation sheet according to claim 1,
wherein the pore size distribution shows a dispersion range of 100 µm or less and shows a single peak.

3. The percolation sheet according to claim 1,
wherein the melting point of the high-melting-point resin is 170°C or greater, and the melting point of the low-melting-point resin is 80°C or greater but less than 170°C.

4. The percolation sheet according to claim 1,
wherein the fibers that form the short-fiber nonwoven fabric have a core-sheath structure in which the surface layer is formed from a low-melting-point polyester and the core is formed from a high-melting-point polyester.

## Patentansprüche

1. Perkolations-Sheet, welches gebildet ist durch Laminieren eines langfasrigen Vliesstoffes mit einem Grundgewicht von 5 bis 30 g/m², von dem zumindest ein Teil aus synthetischen Fasern eines Harzes mit hohem Schmelzpunkt gebildet ist, und eines kurzfasrigen Vliesstoffes mit einem Gewicht von 3 bis 15 g/m², von dem zumindest ein Teil aus synthetischen Fasern eines Harzes mit niedrigem Schmelzpunkt gebildet ist, wobei der kurzfasrige Vliesstoff aus einem Vliesstoff gebildet ist, bei welchem Fasern mit einer Faserlänge von 3 bis 15 mm unter Verwendung eines Trockenverfahrens zufällig verteilt und abgesetzt sind, und thermisch aneinander gebunden sind, und in einem Diagramm, das die Beziehung zwischen der Porengröße der Freiräume in dem Perkolations-Sheet und der Distributionsrate davon illustriert, die Distributionsrate des Maximalpeaks, das zehnfache oder mehr der Distributionsrate der anderen Peaks beträgt.

2. Perkolations-Sheet nach Anspruch 1, wobei die Porengrößeverteilung einen Dispersionsbereich von 100 µm oder weniger zeigt und einen einzelnen Peak zeigt.

3. Perkolations-Sheet nach Anspruch 1, wobei der Schmelzpunkt des Harzes mit hohem Schmelzpunkt 170°C oder größer ist, und der Schmelzpunkt des Harzes mit niedrigem Schmelzpunkt 80°C oder größer aber weniger als 170°C ist.

4. Perkolations-Sheet nach Anspruch 1, wobei die Fasern, die den kurzfasrigen Vliesstoff bilden, eine Kern-Mantelstruktur aufweisen, bei welcher die Oberflächenschicht aus einem Polyester mit niedrigem Schmelzpunkt gebildet ist und der Kern aus einem Polyester mit hohem Schmelzpunkt gebildet ist.

## Revendications

1. Feuille de percolation qui est formée en stratifiant un tissu non tissé à fibres longues avec une masse surfacique de 5 à 30g/m², dont une partie au moins est formée en fibres synthétiques d'une résine à point de fusion élevé, et un tissu non tissé à fibres courtes avec une masse surfacique de 3 à 15g/m², dont une partie au moins est formée en fibres synthétiques d'une résine à point de fusion bas, où le tissu non tissé à fibres courtes est formé d'un tissu non tissé où des fibres d'une longueur de 3 à 15 mm sont dispersées de façon aléatoire et déposées en utilisant un processus par voie sèche, et sont thermiquement liées les unes aux autres, et dans un diagramme illustrant la relation entre la dimension de pore des vides dans la feuille de percolation et son taux de distribution , le taux de distribution du pic maximal est de dix fois ou plus que le taux de distribution des autres pics.

2. Feuille de percolation selon la revendication 1, dans laquelle la distribution des dimensions de pores présente une plage de dispersion de 100 µm ou moins et montre un seul pic.

3. Feuille de percolation selon la revendication 1, dans laquelle le point de fusion de la résine à point de fusion élevé est de 170°C ou plus, et le point de fusion de la résine à point de fusion bas est de 80°C ou plus mais inférieur à 170°C.

4. Feuille de percolation selon la revendication 1, dans laquelle les fibres qui forment le tissu non tissé à fibres courtes ont une structure âme-gaine dans laquelle la couche superficielle est formée d'un polyester à point de fusion bas et le noyau est formé d'un polyester à point de fusion élevé.
